# EUROPEAN PATENT APPLICATION

(11) **EP 3 025 917 A1**
(43) Date of publication of application: **01.06.2016**
(21) Application number: 14829448.1
(22) Date of filing: 18.07.2014
(51) Int. Cl.: B60T 8/48, B60T 8/1761, B60T 13/16, B60T 13/74

(54) **BRAKE CONTROL DEVICE**

(30) Priority: 22.07.2013 JP 2013151279
(71) Applicant: Hitachi Automotive Systems, Ltd., Hitachinaka-shi, Ibaraki 312-8503 (JP)
(72) Inventor: FURUYAMA, Hiroshi, Atsugi-shi Kanagawa 243-8510 (JP)
(74) Representative: Hoefer & Partner Patentanwälte mbB
(86) International application number: PCT/JP2014/069133
(87) International publication number: WO 2015/012204

(57) **Abstract**

A boost state of an upstream side brake fluid pressure producing device that boosts a braking operation force of a braking operation member and produces a fluid pressure in a master cylinder is adjusted according to a refluxing brake fluid characteristic of brake fluid that refluxes to the master cylinderby a pressure decrease control and an outflowing brake fluid characteristic of the brake fluid that flows out of the master cylinder into a wheel cylinder by a pressure increase control, and variation of the braking operation member is suppressed. It is therefore possible to suppress an occurrence of vibration and noise of the brake pedal during the ABS control.

## Description

### TECHNICAL FIELD

The present invention relates to a brake control device.

### BACKGROUND ART

This kind of techniques are disclosed in the following Patent Document 1. Patent Document 1 discloses that by the fact that the number of times of pressure increase of a brake fluid pressure during the progress of ABS control is less than a predetermined number of times or the number of times of pressure decrease of the brake fluid pressure during the progress of ABS control is greater than a predetermined number of times, an excessive state of a master cylinder pressure is detected. When the excessive state of the master cylinder pressure is detected, a boost ratio of a brake booster is decreased, and vibration occurring at a brake pedal is suppressed.

However, a cause of the occurrence of the vibration at the brake pedal during the progress of ABS control is not only the excess of the master cylinder pressure. Brake fluid refluxes from a wheel cylinder to a master cylinder during pressure decrease control and also the brake fluid flows out of the master cylinder to the wheel cylinder during pressure increase control, the master cylinder pressure then varies or fluctuates at each time of the pressure increase and decrease. This causes the vibration and noise of the brake pedal. In a case of technique disclosed in Patent Document 1, there is a possibility that the occurrence of the vibration and the noise of the brake pedal due to the variation of the master cylinder pressure at the time of the pressure increase and decrease will not adequately be suppressed.

The present invention was made in view of the above technical problem. An object of the present invention is therefore to provide a brake control device that is capable of suppressing the occurrence of the vibration and the noise of the brake pedal during the ABS control.

### CITATION LIST

### PATENT DOCUMENT

Patent Document 1: Japanese Unexamined Patent Publication No. JP2000-280880

### SUMMARY OF THE INVENTION

In order to achieve the above object, the brake control device of the present invention adjusts a boost state of an upstream side brake fluid pressure producing device boosting a braking operation force of a braking operation member and producing a fluid pressure in a master cylinder according to a refluxing brake fluid characteristic of brake fluid that refluxes to the master cylinder by a pressure decrease control and an outflowing brake fluid characteristic of the brake fluid that flows out of the master cylinder into a wheel cylinder by a pressure increase control, and suppresses variation of the braking operation member.

It is therefore possible to suppress the occurrence of the vibration and the noise of the brake pedal during the ABS control.

### BRIEF DESCRIPTION OF THE DRAWINGS

Fig. 1 is a general system diagram of a brake device according to an embodiment 1.
Fig. 2 is a control system diagram of the brake device of the embodiment 1.
Fig. 3 is a drawing of a hydraulic circuit of ESC of the embodiment 1.
Fig. 4 is a flow chart showing a flow of control of an electric booster, which is executed during operation of ABS control in an electric booster control unit, of the embodiment 1.
Fig. 5 is a map showing a relationship of a fluid amount of brake fluid supplied to a wheel cylinder W/C with respect to a wheel cylinder pressure, and a relationship of a fluid amount of brake fluid supplied to a master cylinder M/C with respect to a master cylinder pressure, of the embodiment 1.
Fig. 6 is a drawing showing a sensory evaluation point with respect to a pressure difference between the master cylinder pressure and the wheel cylinder pressure, by an experiment previously conducted before carrying out the embodiment 1.
Fig. 7 is a time chart showing changes of the master cylinder pressure and the wheel cylinder pressure when a correction by a master cylinder pressure correction value is not made, of the embodiment 1.
Figs. 8A to 8D are time charts of hydraulic pressures and correction values, of the embodiment 1.
Fig. 9 is a flow chart showing a flow of control of the electric booster, which is executed during operation of ABS control in the electric booster control unit, according to an embodiment 2.
Fig. 10 is a flow chart showing a flow of control of the electric booster, which is executed during operation of ABS control in the electric booster control unit, according to an embodiment 3.
Fig. 11 is a map showing a relationship between an operation depression force of a brake pedal and the master cylinder pressure, of the embodiment 3.
Fig. 12 is a flow chart showing a flow of control of the electric booster, which is executed during operation of ABS control in the electric booster control unit, according to an embodiment 4.
Fig. 13 is a map showing a relationship between a stroke amount of the brake pedal and a discharge fluid amount of the master cylinder, of the embodiment 4.
Fig. 14 is a map showing a relationship between the stroke amount and an allowable pressure difference, according to an embodiment 5.

### EMBODIMENTS FOR CARRYING OUT THE INVENTION

### [Embodiment 1]

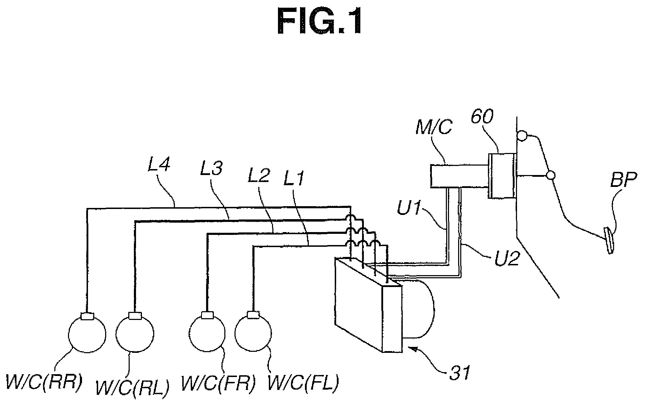

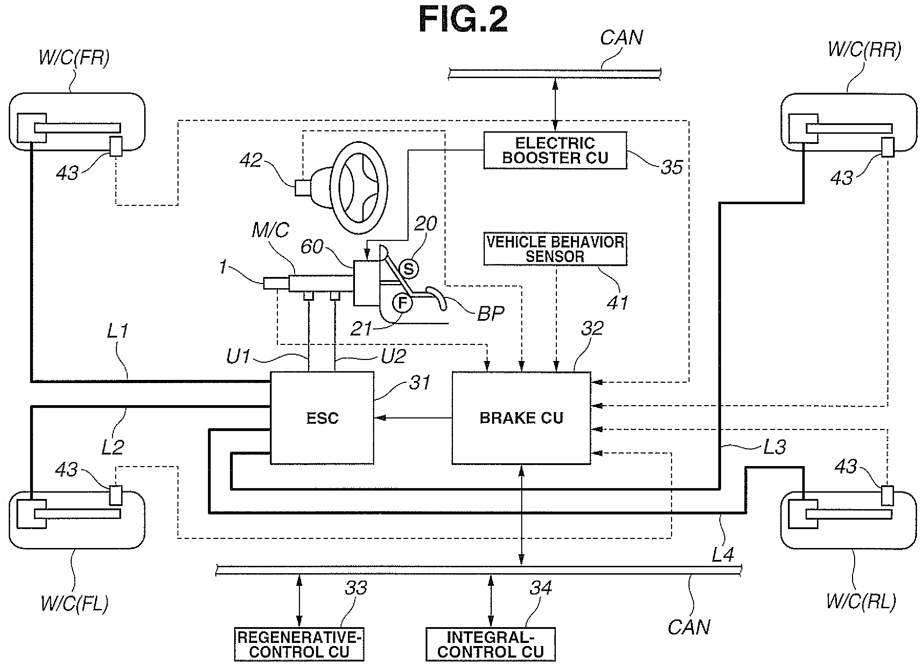

Fig. 1 is a general system diagram of a brake device according to an embodiment 1. Fig. 2 is a control system diagram of the brake device of the embodiment 1. A vehicle of the embodiment 1 is a hybrid vehicle or an electric vehicle which have a motor/generator as a driving source. An integral-control control unit 34 performs a control of an output of a driving force according to driver's accelerator pedal operation. A regenerative-control control unit 33 outputs a control command to a brake control unit 32 and the integral-control control unit 34 to coordination-control a hydraulic braking force and an electric regenerative braking force upon operation of a brake pedal BP, then a desired deceleration is achieved. The brake control unit 32, the regenerative-control control unit 33 and the integral-control control unit 34 are connected to a CAN communication line CAN, and these control units control a travelling condition of the vehicle by sending and receiving sensor information and control signals between them.

Each wheel (FL, FR, RL and RR) is provided with a wheel cylinder W/C that produces the hydraulic braking force and a wheel speed sensor 43 that detects a wheel speed of each wheel. A vehicle speed can be determined from the wheel speed sensor 43 of no-driving wheel (if the vehicle is a front drive vehicle, no-driving wheel is RL and RR). Further, a steering angle sensor 42 that calculates a steering angle of the driver, a vehicle behavior sensor 41 that detects vehicle behavior (lateral acceleration, longitudinal acceleration, yaw rate etc.), a master cylinder pressure sensor 1 that detects a master cylinder pressure, a stroke amount sensor 20 that detects a stroke amount of the brake pedal BP and an operation depression force sensor 21 that detects an operation depression force of the brake pedal BP are provided. The brake control unit 32 calculates the control signal on the basis of each detected sensor signal in addition to the control signal received via the CAN communication line CAN, and outputs a control command signal to an ESC 31. The ESC 31 will be explained in detail later.

The brake pedal BP is provided with a service brake control device (hereinafter described as an electric booster) 60 that can electrically control the stroke amount for the brake pedal depression force and an electric booster control unit 35 that controls an operating state of the electric booster 60. The electric booster 60 is connected to a tandem type master cylinder M/C. The electric booster 60 has an electric motor that can give an assist force in an axial direction to a piston in the master cylinder M/C. With this, when driving the electric motor, a force that moves the piston in the master cylinder M/C is controlled, then the master cylinder pressure can be controlled. The electric booster control unit 35 sends and receives information to and from the other controllers via the CAN communication line CAN. An inside of the master cylinder M/C is divided into a primary cylinder chamber and a secondary cylinder chamber (both not shown). The primary cylinder chamber is connected to P-line pipe U1, while the secondary cylinder chamber is connected to S-line pipe U2. The P-line pipe U1 and the S-line pipe U2 are connected to an electronic stability control (hereinafter described as an ESC) 31. The ESC 31 is connected to each wheel cylinder W/C through pipes L1, L2, L3 and L4.

### [Configuration of hydraulic circuit]

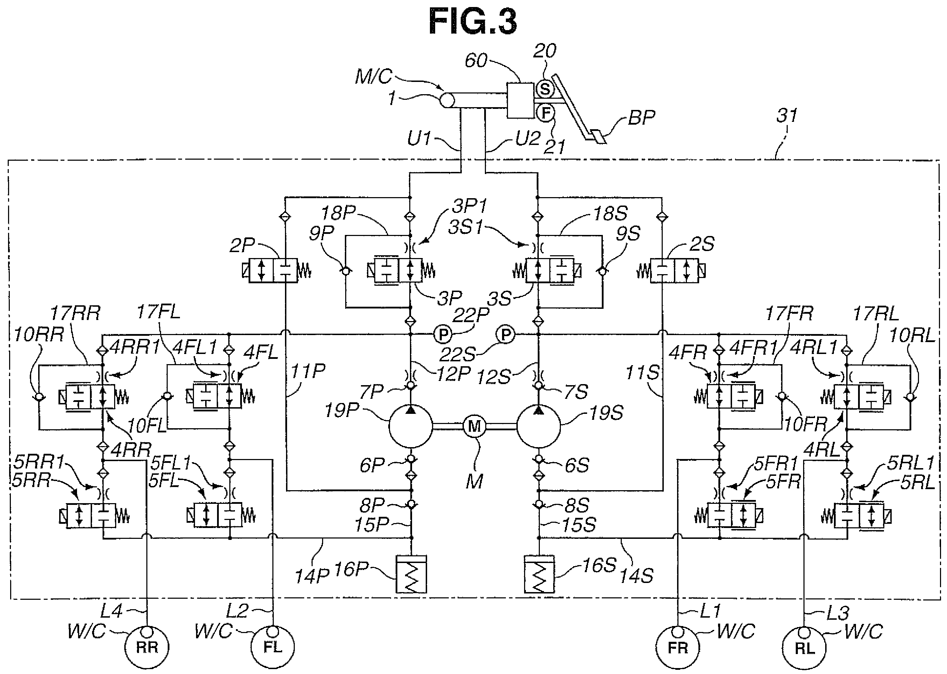

Fig. 3 is a drawing of a hydraulic circuit of ESC 31 of the embodiment 1. The P-line of the ESC 31 is connected to the wheel cylinder W/C (FL) of the front left wheel FL and the wheel cylinder W/C (RR) of the rear right wheel RR. The S-line of the ESC 31 is connected to the wheel cylinder W/C (FR) of the front right wheel FR and the wheel cylinder W/C (RL) of the rear left wheel RL.

Further, the P-line and the S-line are provided with a plunger pump 19P and a plunger pump 19S (hereinafter described as plunger pump 19) respectively. This plunger pump 19 is driven by a motor M. The master cylinder M/C and an inlet side of the plunger pump 19 are connected by a pipe 11P (hereinafter described as pipe 11) that is connected to the P-line pipe U1 and a pipe 11S (hereinafter described as the pipe 11) that is connected to the S-line pipe U2. On the pipe 11, gate-in valves 2P, 2S that are a normally-closed electromagnetic valve are provided. In addition, check valves 6P, 6S (hereinafter described as check valve 6) are provided between the gate-in valves 2P, 2S (hereinafter described as gate-in valve 2) and the plunger pump 19 on the pipe 11. This check valve 6 allows a flow of brake fluid in a direction from the gate-in valve 2 toward the plunger pump 19, and forbids a brake fluid flow of the opposite direction.

An outlet side of the plunger pump 19 and each wheel cylinder W/C are connected by pipes 12P, 12S (hereinafter described as pipe 12). On the pipe 12, solenoid-in valves 4FL, 4FR, 4RL and 4RR (hereinafter described as solenoid-in valve 4) that are a normally-open proportional control electromagnetic valve are provided for each wheel cylinder W/C. In addition, check valves 7P, 7S (hereinafter described as check valve 7) are provided between the solenoid-in valve 4 and the plunger pump 19 on the pipe 12. This check valve 7 allows a flow of brake fluid in a direction from the plunger pump 19 toward the solenoid-in valve 4, and forbids a brake fluid flow of the opposite direction.

Between the check valve 7 and the solenoid-in valve 4 on the pipe 12, discharge pressure sensors 22P, 22S (hereinafter described as discharge pressure sensor 22) are provided. Here, it is possible to provide only one of the discharge pressure sensors 22P, 22S. A wheel cylinder pressure in each wheel cylinder W/C can be determined from a detection value of the discharge pressure sensor 22, a valve open time of the solenoid-in valve 4 and a valve open time of an after-mentioned solenoid-out valve 5.

Further, pipes 17FL, 17FR, 17RL and 17RR (hereinafter described as pipe 17) that bypass the solenoid-in valve 4 are provided on the pipe 12. On this pipe 17, check valves 10FL, 10FR, 10RL and 10RR (hereinafter described as check valve 10) are provided. This check valve 10 allows a flow of brake fluid in a direction from the wheel cylinder W/C toward the plunger pump 19, and forbids a brake fluid flow of the opposite direction.

The master cylinder M/C and the pipe 12 are connected by pipes 13P, 13S (hereinafter described as pipe 13). The pipe 12 and the pipe 13 are joined between the plunger pump 19 and the solenoid-in valve 4. On the pipe 13, gate-out valves 3P, 3S (hereinafter described as gate-out valve 3) that are a normally-open proportional control electromagnetic valve are provided.

In addition, pipes 18P, 18S (hereinafter described as pipe 18) that bypass the gate-out valve 3 are provided on the pipe 13. On this pipe 18, check valves 9P, 9S (hereinafter described as check valve 9) are provided. This check valve 9 allows a flow of brake fluid in a direction from the master cylinder M/C toward the wheel cylinder W/C, and forbids a brake fluid flow of the opposite direction.

Reservoirs 16P, 16S (hereinafter described as reservoir 16) are provided on the inlet side of the of the plunger pump 19. This reservoir 16 and the plunger pump 19 are connected by pipes 15P, 15S (hereinafter described as pipe 15). Between the reservoir 16 and the plunger pump 19, check valves 8P, 8S (hereinafter described as check valve 8). This check valve 8 allows a flow of brake fluid in a direction from the reservoir 16 toward the plunger pump 19, and forbids a brake fluid flow of the opposite direction. The wheel cylinder W/C and the pipe 15 are connected by pipes 14P, 14S (hereinafter described as pipe 14). The pipe 15 and the pipe 14 are joined between the check valve 8 and the reservoir 16. On the pipe 14, solenoid-out valves 5FL, 5FR, 5RL and 5RR (hereinafter described as solenoid-out valve 5) that are a normally-closed electromagnetic valve are provided.

Each solenoid valve (the gate-in valve 2, the gate-out valve 3, the solenoid-in valve 4 and solenoid-out valve 5) and the motor M are controlled by the brake control unit 32. The brake control unit 32 performs a brake assist control (BA) that adds a braking force, an antilock brake control (ABS) that prevents lock of the wheel and a vehicle behavior stability control (ESC) that stabilizes the vehicle behavior on the basis of the control signal from the other controllers and an input signal of each sensor. Further, the brake control unit 32 performs calculation to control slip of tire (the wheel) and the vehicle behavior using vehicle information of a vehicle-to-vehicle distance control and an obstacle avoidance control from the other controllers, and calculates a necessary braking force for the vehicle (for all wheels) also calculates a braking force target value required for each wheel, then outputs a control command.

### [Electric booster control during operation of ABS control]

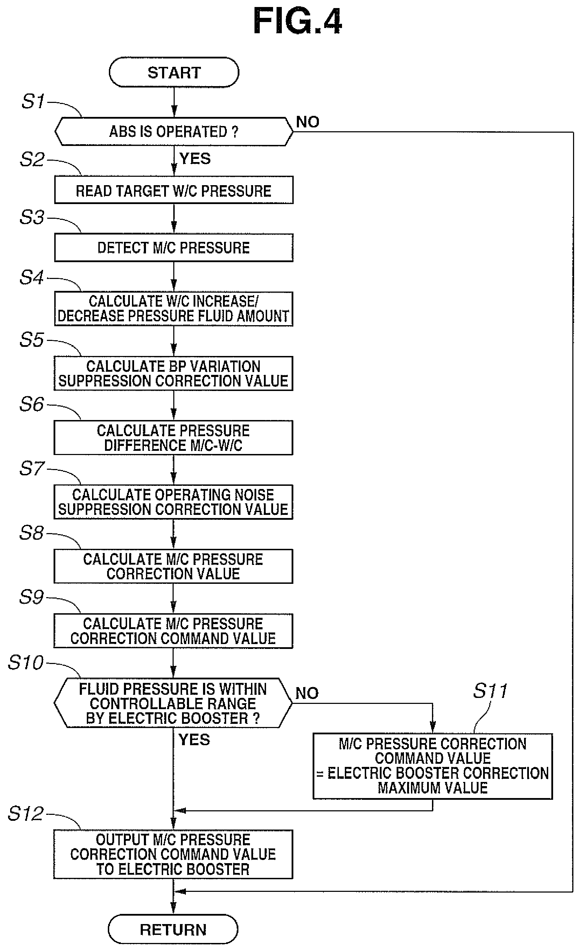

Fig. 4 is a flow chart showing a flow of control of the electric booster 60, which is executed during operation of the ABS control in the electric booster control unit 35.

At step S1, a judgment is made as to whether or not the ABS is operated (the ABS is in progress). If the ABS is operated, the routine proceeds to step S2. If the ABS is not operated, this process is ended.

At step S2, a target wheel cylinder pressure by the ABS operation is read from the brake control unit 32, and the routine proceeds to step S3.

At step S3, a current master cylinder pressure is detected, and the routine proceeds to step S4.

At step S4, a wheel cylinder increase/decrease pressure fluid amount is calculated, and the routine proceeds to step S5. The wheel cylinder increase/decrease pressure fluid amount is an amount of the brake fluid that is refluxed from the wheel cylinder W/C to the master cylinder M/C to attain the target wheel cylinder pressure from a current wheel cylinder pressure by a pressure decrease control. Also, the wheel cylinder increase/decrease pressure fluid amount is an amount of the brake fluid that flows out of the master cylinder M/C to the wheel cylinder W/C to attain the target wheel cylinder pressure from a current wheel cylinder pressure by a pressure increase control.

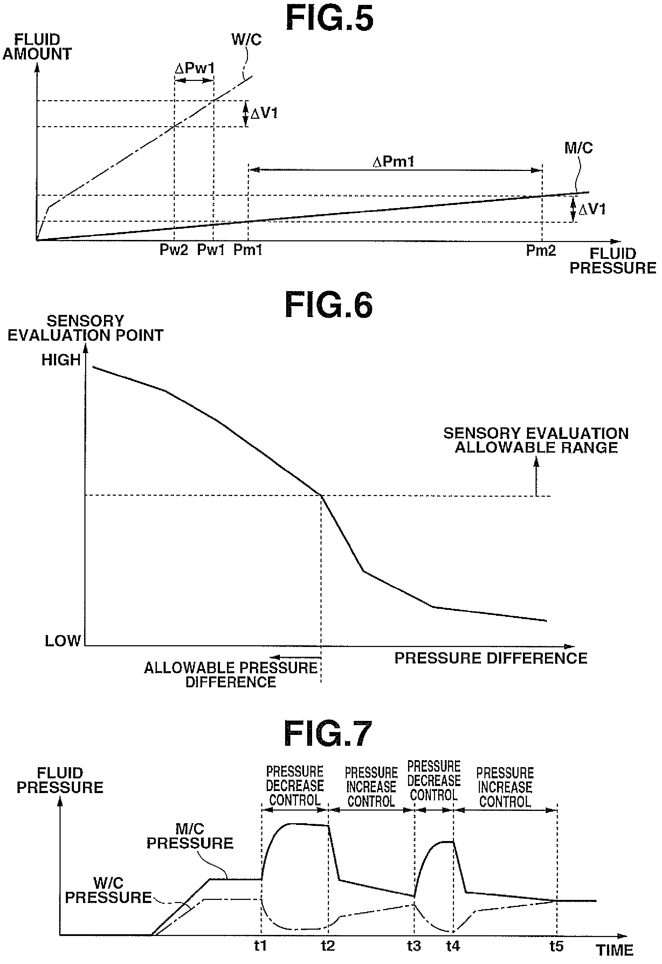

Fig. 5 is a map showing a relationship of a fluid amount of the brake fluid supplied to the wheel cylinder W/C with respect to the wheel cylinder pressure, and a relationship of a fluid amount of the brake fluid supplied to the master cylinder M/C with respect to the master cylinder pressure. The wheel cylinder increase/decrease pressure fluid amount can be determined from a difference between the current wheel cylinder pressure and the target wheel cylinder pressure using the map of Fig. 5. In Fig. 5, when the current wheel cylinder pressure is Pw1 and the target wheel cylinder pressure is Pw2, the wheel cylinder pressure is decreased by ΔPw1 by the ABS control. At this time, a fluid amount ΔV1 is refluxed from the wheel cylinder W/C to the master cylinder M/C.

At step S5, a brake pedal variation suppression correction value is calculated, and the routine proceeds to step S6.

The brake pedal variation suppression correction value is a value for suppressing variation of a reaction force of the brake pedal BP and vibration of the brake pedal BP, which are caused by increase of the master cylinder pressure (a refluxing brake fluid characteristic) by the refluxing brake fluid during the pressure decrease control or caused by decrease of the master cylinder pressure (an outflowing brake fluid characteristic) by the outflowing brake fluid during the pressure increase control.

The brake pedal variation suppression correction value can be determined from the current master cylinder pressure and the wheel cylinder increase/decrease pressure fluid amount using the map of Fig. 5. In Fig. 5, when the current master cylinder pressure is Pm1 and the refluxing wheel cylinder increase/decrease pressure fluid amount is ΔV1, the master cylinder pressure is increased to Pm2 by the brake fluid refluxed by the pressure decrease control. At this time, by setting the brake pedal variation suppression correction value to -ΔPm1, the master cylinder pressure can be held at Pm1.

At step S6, a pressure difference between the master cylinder pressure and the wheel cylinder pressure is calculated, and the routine proceeds to step S7. As the pressure difference, a pressure difference when the wheel cylinder pressure becomes a maximum after start of the ABS control is used. Or, a maximum wheel cylinder pressure of the current wheel cylinder pressure could be used.

At step S7, an operating noise suppression correction value is calculated, and the routine proceeds to step S8. The operating noise suppression correction value is a correction value for suppressing operating noise generated at the ESC 31 during the ABS operation. In a case where the pressure difference between the master cylinder pressure and the wheel cylinder pressure is large, since the brake fluid has to be refluxed against the master cylinder pressure upon the pressure decrease control, operating noises of the motor M and the pump 19 become large. Further, during the pressure increase control, there is a case where a larger noise is generated by or depending on the pressure difference between the master cylinder pressure and the wheel cylinder pressure.

Fig. 6 is a drawing showing a sensory evaluation point with respect to the pressure difference between the master cylinder pressure and the wheel cylinder pressure by a previously conducted experiment. This shows that the higher the sensory evaluation point, the smaller the operating noise during the ABS operation and the smaller the occupant's odd or awkward feeling. An allowable range of the occupant's odd feeling is set as a sensory evaluation allowable range, and the operating noise suppression correction value is set so that the pressure difference becomes an allowable pressure difference within the sensory evaluation allowable range. In other words, the operating noise suppression correction value is set so that the operating noise is equal to or smaller than a predetermined operating noise.

At step S8, a master cylinder pressure correction value is calculated, and the routine proceeds to step S9. The master cylinder pressure correction value can be determined by the sum (a total) of the brake pedal variation suppression correction value and the operating noise suppression correction value.

At step S9, a master cylinder pressure correction command value is calculated, and the routine proceeds to step S10. The master cylinder pressure correction command value can be determined by the sum (a total) of the current master cylinder pressure and the master cylinder pressure correction value.

At step S10, a judgment is made as to whether or not a fluid pressure by the master cylinder pressure correction command value is within a controllable range by the electric booster 60. If it is feasible, the routine proceeds to step S12. If it is not feasible, the routine proceeds to step S11.

At step S11, the master cylinder pressure correction command value is limited to (or is set to) a controllable maximum value by the electric booster 60, and the routine proceeds to step S12.

At step S12, the master cylinder pressure correction command value is outputted to the electric booster 60, and this process is ended.

### [Operation]

Fig. 7 is a time chart showing changes of the master cylinder pressure and the wheel cylinder pressure when the above correction by the master cylinder pressure correction value is not made.

At time t1, a locking tendency of the wheel is detected, and the pressure decrease control is started. At this time, since the pressure difference between the master cylinder pressure and the wheel cylinder pressure is large and the brake fluid has to be refluxed against the master cylinder pressure, the operating noises of the motor M and the pump 19 become large. Although the pressure decrease control continues up to time t2, since the brake fluid refluxes from the wheel cylinder W/C to the master cylinder M/C for this time period, the master cylinder pressure increases.

At time t2, when the wheel speed approaches closer to the vehicle speed, the pressure increase control is started. Although the pressure increase control continues up to time t3, since the brake fluid flows out of the master cylinder M/C to the wheel cylinder W/C for this time period, the master cylinder pressure decreases.

After time t3, the master cylinder pressure repeatedly increases and decreases everytime the pressure decrease control (time t3~t4) and the pressure increase control (timet4~t5) repeat, and this causes the vibration and the noise of the brake pedal BP.

In general, the P-line pipe U1 and the S-line pipe U2 which connect the master cylinder M/C and the ESC 31 are a hard or solid pipe, whereas the pipes L1, L2, L3 and L4 which connect the ESC 31 and the wheel cylinder W/C are a soft pipe. Because of this, even in a case of the same fluid amount change, a fluid pressure change on the master cylinder M/C side is greater than that on the wheel cylinder W/C side (see Fig. 5). That is, as compared with a pressure increase/decrease change amount of the wheel cylinder pressure, a pressure increase/decrease change amount of the master cylinder pressure is large, and the occupant' s odd feeling becomes large.

Therefore, in the embodiment 1, on the basis of the increase of the master cylinder pressure (i.e. pressures in the P-line pipe U1 and the S-line pipe U2) (the refluxing brake fluid characteristic) when attaining the target wheel cylinder pressure from the current wheel cylinder pressure by the pressure decrease control, the master cylinder pressure correction value is determined. Or, on the basis of the decrease of the master cylinder pressure (i.e. pressures in the P-line pipe U1 and the S-line pipe U2) (the outflowing brake fluid characteristic) when attaining the target wheel cylinder pressure from the current wheel cylinder pressure by the pressure increase control, the master cylinder pressure correction value is determined.

Then, the sum of the current master cylinder pressure and the master cylinder pressure correction value is set as the master cylinder pressure correction command value, and the electric booster 60 is controlled according to this master cylinder pressure correction command value.

With these setting and control, it is possible to suppress the variation of the master cylinder pressure during the ABS control, then the variation of the brake pedal BP can be suppressed.

Further, in the embodiment 1, the operating noise suppression correction value is determined on the basis of the pressure difference between the master cylinder pressure and the wheel cylinder pressure upon operation of the ABS control.

With this, it is possible to reduce the operating noises of the motor M and the pump 19 during the ABS control.

In addition, in the embodiment 1, the operating noise suppression correction value is set so that the operating noise is equal to or smaller than the predetermined operating noise. The occupant's odd feeling during the ABS control can therefore be suppressed.

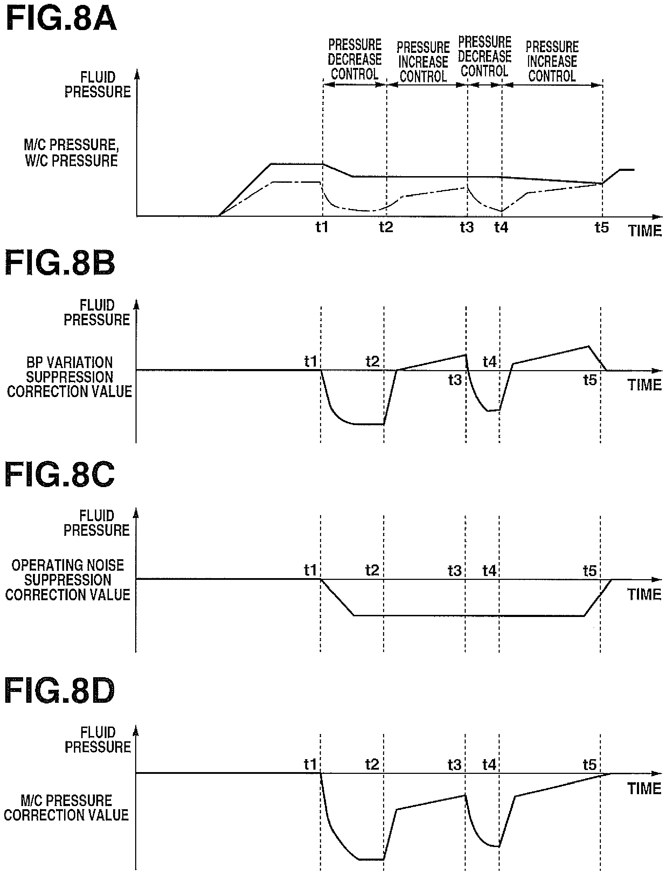

Figs. 8A to 8D are time charts of hydraulic pressures and correction values. Fig. 8A is a time chart showing the master cylinder pressure and the wheel cylinder pressure when making the correction by the master cylinder pressure correction value. Fig. 8B is a time chart of the brake pedal variation suppression correction value. Fig. 8C is a time chart of the operating noise suppression correction value. Fig. 8D is a time chart of the master cylinder pressure correction value.

At time t1, a locking tendency of the wheel is detected, and the pressure decrease control is started. The operating noise suppression correction value is set according to the pressure difference between the master cylinder pressure and the wheel cylinder pressure of this time. Once the ABS control starts, the operating noise suppression correction value is held at a constant correction value until the ABS control ends.

The pressure decrease control is performed up to time t2, and the brake fluid is refluxed from the wheel cylinder W/C to the master cylinder M/C for this time period. By decreasing an output of the electric booster 60 by an amount of the increase of the master cylinder pressure due to the refluxing brake fluid by the brake pedal variation suppression correction value, the increase of the master cylinder pressure is suppressed.

At time t2, when the wheel speed approaches closer to the vehicle speed, the pressure increase control is started. Although the pressure increase control continues up to time t3, the brake fluid flows out of the master cylinder M/C to the wheel cylinder W/C for this time period. By increasing the output of the electric booster 60 by an amount of the decrease of the master cylinder pressure due to the outflowing brake fluid by the brake pedal variation suppression correction value, the decrease of the master cylinder pressure is suppressed.

After time t3, although the pressure decrease control (time t3 ~ t4) and the pressure increase control (time t4 ~ t5) repeat, by increasing and decreasing the output of the electric booster 60 by the brake pedal variation suppression correction value, the increase and the decrease of the master cylinder pressure can be suppressed. With this control, it is possible to suppress the vibration and the noise of the brake pedal BP.

### [Effect]

(1) A brake control device comprises: a brake pedal BP (a braking operation member) operated by a driver; an electric booster 60 (an upstream side brake fluid pressure producing device) boosting a braking operation force of the brake pedal BP and producing a fluid pressure in a master cylinder M/C; an ESC 31 (a downstream side brake fluid pressure producing device) driving a plunger pump 19 (a pump) and a gate-in valve 2, a gate-out valve 3, a solenoid-in valve 4 and a solenoid-out valve 5 (a control valve) and performing a pressure increase/decrease control of a wheel cylinder pressure; a P-line pipe U1 and an S-line pipe U2 (a first brake fluid passage) connecting the master cylinder M/C and the ESC 31; pipes L1, L2, L3 and L4 (a second brake fluid passage) connecting the ESC 31 and a wheel cylinder W/C; a brake control unit 32 (an antilock brake control unit) having a pressure decrease control that refluxes brake fluid in the wheel cylinder W/C provided at a wheel to the master cylinder M/C through the P-line pipe U1 and the S-line pipe U2 and the pipes L1, L2, L3 and L4 by the plunger pump 19 and a pressure increase control that increases the wheel cylinder pressure by the brake fluid in the master cylinder M/C. A characteristic of the brake fluid refluxing to the master cylinder M/C by the pressure decrease control and a characteristic of the brake fluid flowing out of the master cylinder M/C into the wheel cylinder W/C by the pressure increase control are calculated (step S4 : a refluxing brake fluid characteristic calculation unit, an outflowing brake fluid characteristic calculation unit), a boost state of the electric booster 60 is adjusted according to the calculated refluxing brake fluid characteristic and outflowing brake fluid characteristic, and variation of the brake pedal BP is suppressed (step S5: a braking operation member variation suppression control unit).
   Therefore, the electric booster 60 can be controlled according to the fluid pressure change during the ABS control, and it is possible to suppress the variation of the master cylinder pressure and suppress the variation of the brake pedal BP.
(2) A fluid pressure change in the P-line pipe U1 and the S-line pipe U2 and the pipes L1, L2, L3 and L4 is calculated (steps S4, S5: a fluid pressure change calculation unit), and the refluxing brake fluid characteristic is the fluid pressure change of the brake fluid in the P-line pipe U1 and the S-line pipe U2 and the pipes L1, L2, L3 and L4.
   Therefore, the electric booster 60 can be controlled according to the fluid pressure change during the ABS control, and it is possible to suppress the variation of the master cylinder pressure and suppress the variation of the brake pedal BP.
(3) The brake control device further comprises: a master cylinder pressure sensor 1 (a master cylinder pressure calculation unit) calculating a master cylinder pressure; and a pressure sensor 22 (a wheel cylinder pressure calculation unit) calculating the wheel cylinder pressure. The boost state of the electric booster 60 is adjusted (step S5: the braking operation member variation suppression control unit) according to the calculated refluxing brake fluid characteristic and outflowing brake fluid characteristic, and also the boost state of the electric booster 60 is adjusted (step S7: the braking operation member variation suppression control unit) according to a pressure difference between the master cylinder pressure and the wheel cylinder pressure, which is calculated upon operation of the brake control unit 32, and the variation of the brake pedal BP is suppressed.
   Therefore, the noise of the motor M and the pump 19 during the ABS control can be reduced.
(4) A pressure difference between the master cylinder pressure and the wheel cylinder pressure is set (step S7 : a pressure difference setting unit), and a magnitude of the pressure difference is set so that operating noise of the ESC 31 is equal to or smaller than a predetermined operating noise.
   Therefore, the occupant's odd feeling can be suppressed.
(5) A brake control device comprises: a brake pedal BP (a braking operation member) operated by a driver; an electric booster 60 (a control booster) boosting an operation depression force of brake pedal BP by the driver and producing a fluid pressure in a master cylinder M/C; an ESC 31 (a brake fluid pressure producing device) provided with a brake control unit 32 (an antilock brake control unit) that drives a plunger pump 19 (a pump) and a gate-in valve 2, a gate-out valve 3, a solenoid-in valve 4 and a solenoid-out valve 5 (a control valve) and performs a pressure increase/decrease control of a wheel cylinder pressure; a P-line pipe U1 and an S-line pipe U2 (a first brake fluid passage) connecting the master cylinder M/C and the ESC 31; pipes L1, L2, L3 and L4 (a second brake fluid passage) connecting the ESC 31 and a wheel cylinder W/C. The brake control unit 32 has a pressure decrease control that refluxes brake fluid in the wheel cylinder W/C provided at a wheel to the master cylinder M/C through the P-line pipe U1 and the S-line pipe U2 and the pipes L1, L2, L3 and L4 by the plunger pump 19 and a pressure increase control that increases the wheel cylinder pressure by the brake fluid in the master cylinder M/C boosted through the electric booster 60. A boost state of the electric booster 60 is adjusted according to a refluxing brake fluid characteristic of the brake fluid refluxing to the master cylinder M/C by the pressure decrease control and an outflowing brake fluid characteristic of the brake fluid flowing out of the master cylinder M/C into the wheel cylinder W/C by the pressure increase control, and variation of the brake pedal BP is suppressed (step S5 a braking operation member variation suppression control unit).
   Therefore, the variation of the master cylinder pressure can be suppressed during the ABS control, and the variation of the brake pedal BP can be suppressed.
(6) A brake control device comprises: a brake pedal BP (a braking operation member) operated by a driver; an electric booster 60 (an upstream side brake fluid pressure producing device) boosting a braking operation force of the brake pedal BP and producing a fluid pressure in a master cylinder M/C; an ESC 31 (a downstream side brake fluid pressure producing device) driving a plunger pump 19 (a pump) and a gate-in valve 2, a gate-out valve 3, a solenoid-in valve 4 and a solenoid-out valve 5 (a control valve) and performing a pressure increase/decrease control of a wheel cylinder pressure; a P-line pipe U1 and an S-line pipe U2 (a first brake fluid passage) connecting the master cylinder M/C and the ESC 31; pipes L1, L2, L3 and L4 (a second brake fluid passage) connecting the ESC 31 and a wheel cylinder W/C; a brake control unit 32 (an antilock brake control unit) having a pressure decrease control that refluxes brake fluid in the wheel cylinder W/C provided at a wheel to the master cylinder M/C through the P-line pipe U1 and the S-line pipe U2 and the pipes L1, L2, L3 and L4 by the plunger pump 19 and a pressure increase control that increases the wheel cylinder pressure by the brake fluid in the master cylinder M/C. Aboost state of the electric booster 60 is increased or decreased during an antilock brake control by the brake control unit 32, and variation of the brake pedal BP is suppressed (step S5 : a braking operation member variation suppression control unit).

Therefore, the variation of the master cylinder pressure can be suppressed during the ABS control, and the variation of the brake pedal BP can be suppressed.

### [Embodiment 2]

Contents of the electric booster control upon operation of the ABS control according to an embodiment 2 are different from those of the embodiment 1. In the embodiment 2, the same configuration as that of the embodiment 1 is indicated by the same reference sign, and its explanation will be omitted here.

### [Electric booster control during operation of ABS control]

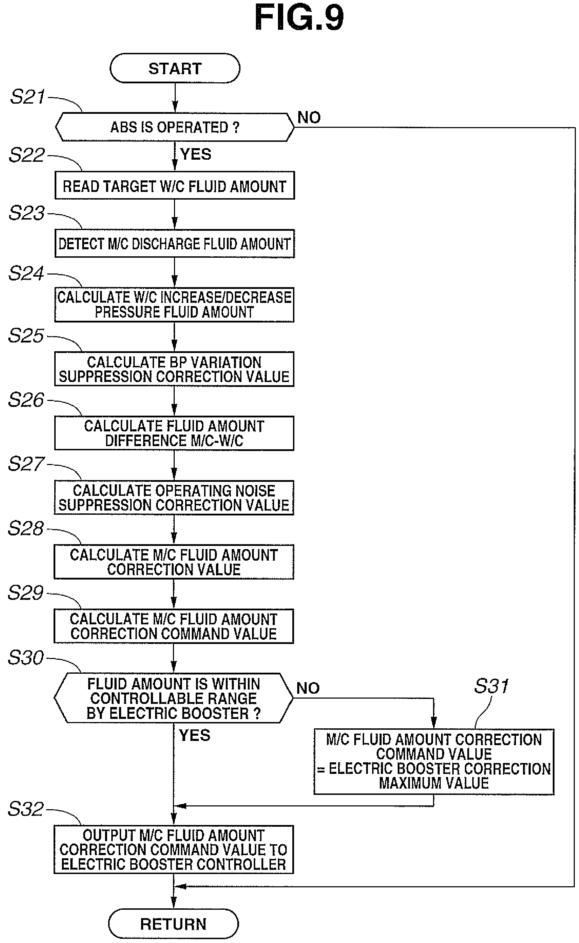

Fig. 9 is a flow chart showing a flow of control of the electric booster 60, which is executed during operation of the ABS control in the electric booster control unit 35.

At step S21, a judgment is made as to whether or not the ABS is operated (the ABS is in progress). If the ABS is operated, the routine proceeds to step S22. If the ABS is not operated, this process is ended.

At step S22, a target wheel cylinder fluid amount by the ABS operation is read from the brake control unit 32, and the routine proceeds to step S23.

At step S23, a current master cylinder discharge fluid amount (hereinafter described as a master cylinder fluid amount) is detected, and the routine proceeds to step S24. The master cylinder fluid amount can be determined from the brake pedal stroke amount.

At step S24, a wheel cylinder increase/decrease pressure fluid amount is calculated, and the routine proceeds to step S25. The wheel cylinder increase/decrease pressure fluid amount is an amount of the brake fluid that is refluxed from the wheel cylinder W/C to the master cylinder M/C to attain the target wheel cylinder fluid amount from a current wheel cylinder fluid amount by the pressure decrease control. Also, the wheel cylinder increase/decrease pressure fluid amount is an amount of the brake fluid that flows out of the master cylinder M/C to the wheel cylinder W/C to attain the target wheel cylinder fluid amount from a current wheel cylinder fluid amount by the pressure increase control.

At step S25, a brake pedal variation suppression correction value is calculated, and the routine proceeds to step S26. The brake pedal variation suppression correction value is a value for suppressing variation of the reaction force of the brake pedal BP and the vibration of the brake pedal BP, which are caused by increase of the master cylinder fluid amount (a refluxing brake fluid characteristic) by the refluxing brake fluid during the pressure decrease control or caused by decrease of the master cylinder fluid amount (an outflowing brake fluid characteristic) by the outflowing brake fluid during the pressure increase control.

At step S26, a fluid amount difference between the master cylinder fluid amount and the wheel cylinder fluid amount is calculated, and the routine proceeds to step S27. As the fluid amount difference, a fluid amount difference when the wheel cylinder fluid amount becomes a maximum after start of the ABS control is used. Or, a maximum wheel cylinder fluid amount of the current wheel cylinder fluid amount could be used.

At step S27, an operating noise suppression correction value is calculated, and the routine proceeds to step S28. The operating noise suppression correction value is a correction value for suppressing operating noise generated at the ESC 31 during the ABS operation. A map of a sensory evaluation point with respect to the fluid amount difference is created by an experiment in the same manner as Fig. 6 of the embodiment 1, and the operating noise suppression correction value is set so that the fluid amount difference becomes an allowable fluid amount difference.

At step S28, a master cylinder fluid amount correction value is calculated, and the routine proceeds to step S29. The master cylinder fluid amount correction value can be determined by the sum (a total) of the brake pedal variation suppression correction value and the operating noise suppression correction value.

At step S29, a master cylinder fluid amount correction command value is calculated, and the routine proceeds to step S30. The master cylinder fluid amount correction command value can be determined by the sum (a total) of the current master cylinder fluid amount and the master cylinder fluid amount correction value.

At step S30, a judgment is made as to whether or not a fluid amount by the master cylinder fluid amount correction command value is within a controllable range by the electric booster 60. If it is feasible, the routine proceeds to step S32. If it is not feasible, the routine proceeds to step S31.

At step S31, the master cylinder fluid amount correction command value is limited to (or is set to) a controllable maximum value by the electric booster 60, and the routine proceeds to step S32.

At step S32, the master cylinder fluid amount correction command value is outputted to the electric booster 60, and this process is ended.

### [Operation]

A fluid amount change in the P-line pipe U1, the S-line pipe U2 and the pipes L1, L2, L3 and L4 is calculated (steps S24, S25 : a fluid amount change calculation unit), and the refluxing brake fluid characteristic is the fluid amount change of the brake fluid in the P-line pipe U1, the S-line pipe U2 and the pipes L1, L2, L3 and L4.

With this, the electric booster 60 can be controlled according to the fluid amount change during the ABS control, and it is possible to suppress the variation of the master cylinder pressure (or the master cylinder fluid amount) and suppress the variation of the brake pedal BP.

### [Effect]

(7) The fluid amount change in the P-line pipe U1, the S-line pipe U2 and the pipes L1, L2, L3 and L4 is calculated (steps S24, S25: the fluid amount change calculation unit), and the refluxing brake fluid characteristic is the fluid amount change of the brake fluid in the P-line pipe U1, the S-line pipe U2 (a first brake fluid passage) and the pipes L1, L2, L3 and L4 (a second brake fluid passage).

Therefore, the electric booster 60 can be controlled according to the fluid amount change during the ABS control, and it is possible to suppress the variation of the master cylinder pressure (or the master cylinder fluid amount) and suppress the variation of the brake pedal BP.

### [Embodiment 3]

Contents of the electric booster control upon operation of the ABS control according to an embodiment 3 are different from those of the embodiment 1. In the embodiment 3, the same configuration as that of the embodiment 1 is indicated by the same reference sign, and its explanation will be omitted here.

### [Electric booster control during operation of ABS control]

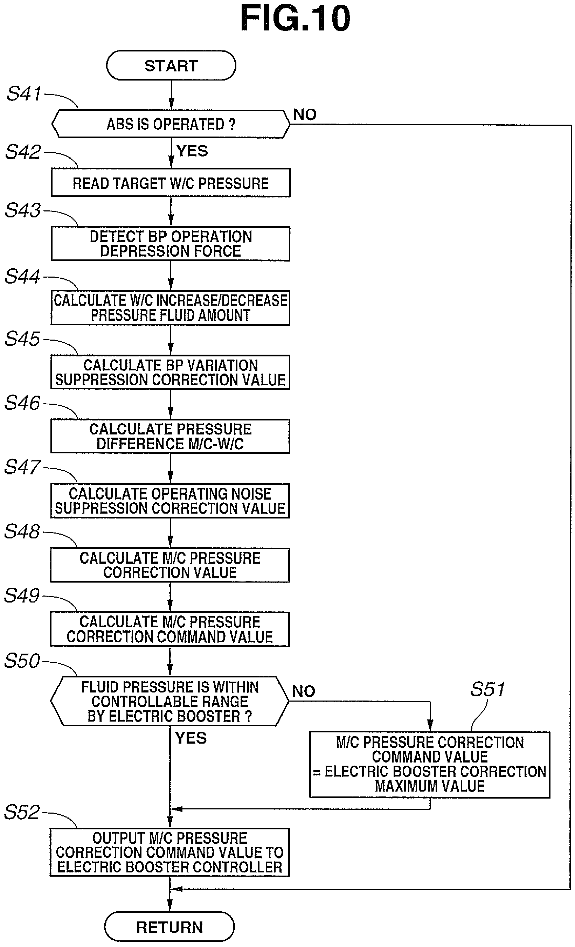

Fig. 10 is a flow chart showing a flow of control of the electric booster 60, which is executed during operation of the ABS control in the electric booster control unit 35.

At step S41, a judgment is made as to whether or not the ABS is operated (the ABS is in progress). If the ABS is operated, the routine proceeds to step S42. If the ABS is not operated, this process is ended.

At step S42, a target wheel cylinder pressure by the ABS operation is read from the brake control unit 32, and the routine proceeds to step S43.

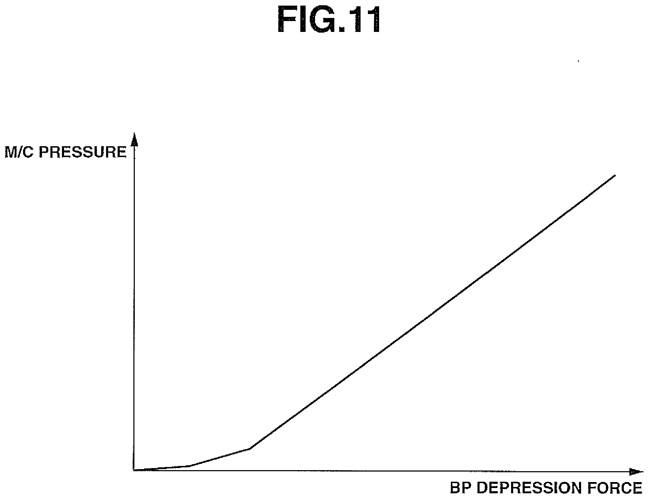

At step S43, a current operation depression force of the brake pedal BP is detected, and the routine proceeds to step S44. Fig. 11 is a map showing a relationship between the operation depression force of the brake pedal BP and the master cylinder pressure. The master cylinder pressure can be detected from the operation depression force using this map.

At step S44, a wheel cylinder increase/decrease pressure fluid amount is calculated, and the routine proceeds to step S45. The wheel cylinder increase/decrease pressure fluid amount is an amount of the brake fluid that is refluxed from the wheel cylinder W/C to the master cylinder M/C to attain the target wheel cylinder pressure from a current wheel cylinder pressure by a pressure decrease control. Also, the wheel cylinder increase/decrease pressure fluid amount is an amount of the brake fluid that flows out of the master cylinder M/C to the wheel cylinder W/C to attain the target wheel cylinder pressure from a current wheel cylinder pressure by a pressure increase control.

At step S45, a brake pedal variation suppression correction value is calculated, and the routine proceeds to step S46. The brake pedal variation suppression correction value is a value for suppressing variation of a reaction force of the brake pedal BP and vibration of the brake pedal BP, which are caused by increase of the operation depression force (a refluxing brake fluid characteristic) due to increase of the master cylinder pressure by the refluxing brake fluid during the pressure decrease control or caused by decrease of the operation depression force (an outflowing brake fluid characteristic) due to decrease of the master cylinder pressure by the outflowing brake fluid during the pressure increase control. Setting of the brake pedal variation suppression correction value is the same as the embodiment 1.

At step S46, a pressure difference between the master cylinder pressure and the wheel cylinder pressure is calculated, and the routine proceeds to step S47. As the pressure difference, a pressure difference when the wheel cylinder pressure becomes a maximum after start of the ABS control is used.

At step S47, an operating noise suppression correction value is calculated, and the routine proceeds to step S48. The operating noise suppression correction value is a correction value for suppressing operating noise generated at the ESC 31 during the ABS operation. A map of a sensory evaluation point is created by an experiment in the same manner as Fig. 6 of the embodiment 1, and the operating noise suppression correction value is set so that the pressure difference becomes an allowable pressure difference.

At step S48, a master cylinder pressure correction value is calculated, and the routine proceeds to step S49. The master cylinder pressure correction value can be determined by the sum (a total) of the brake pedal variation suppression correction value and the operating noise suppression correction value. At step S49, a master cylinder pressure correction command value is calculated, and the routine proceeds to step S50. The master cylinder pressure correction command value can be determined by the sum (a total) of the current master cylinder pressure and the master cylinder pressure correction value.

At step S50, a judgment is made as to whether or not a fluid pressure by the master cylinder pressure correction command value is within a controllable range by the electric booster 60. If it is feasible, the routine proceeds to step S52. If it is not feasible, the routine proceeds to step S51.

At step S51, the master cylinder pressure correction command value is limited to (or is set to) a controllable maximum value by the electric booster 60, and the routine proceeds to step S52.

At step S52, the master cylinder pressure correction command value is outputted to the electric booster 60, and this process is ended.

### [Operation]

The operation depression force sensor 21 (an operation depression force calculation unit) that calculates the operation depression force of the brake pedal BP is provided, and the refluxing brake fluid characteristic is the operation depression force change calculated by the operation depression force sensor 21 which occurs according to or in response to fluid flow of the brake fluid in the P-line pipe U1, the S-line pipe U2 and the pipes L1, L2, L3 and L4.

With this, the electric booster 60 can be controlled according to the operation depression force change during the ABS control, and it is possible to suppress the variation of the master cylinder pressure and suppress the variation of the brake pedal BP.

### [Effect]

(8) The operation depression force sensor 21 (the operation depression force calculation unit) that calculates the operation depression force of the brake pedal BP (a braking operation member) is provided, and the refluxing brake fluid characteristic is the operation depression force change calculated by the operation depression force sensor 21 which occurs according to or in response to fluid flow of the brake fluid in the P-line pipe U1, the S-line pipe U2 (the first brake fluid passage) and the pipes L1, L2, L3 and L4 (the second brake fluid passage).

Therefore, the electric booster 60 can be controlled according to the operation depression force change during the ABS control, and it is possible to suppress the variation of the master cylinder pressure and suppress the variation of the brake pedal BP.

### [Embodiment 4]

Contents of the electric booster control upon operation of the ABS control according to an embodiment 4 are different from those of the embodiment 1. In the embodiment 4, the same configuration as that of the embodiment 1 is indicated by the same reference sign, and its explanation will be omitted here.

### [Electric booster control during operation of ABS control]

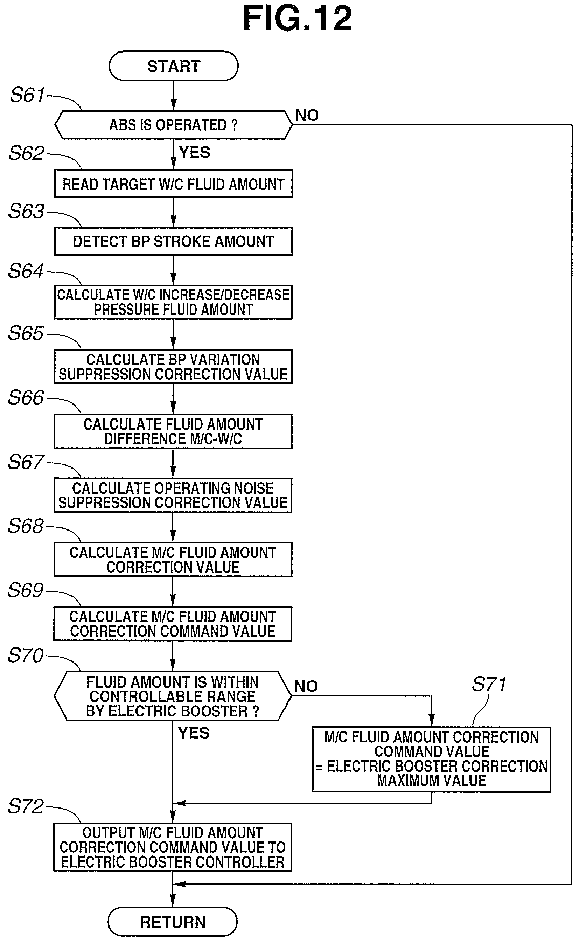

Fig. 12 is a flow chart showing a flow of control of the electric booster 60, which is executed during operation of the ABS control in the electric booster control unit 35.

At step S61, a judgment is made as to whether or not the ABS is operated (the ABS is in progress). If the ABS is operated, the routine proceeds to step S62. If the ABS is not operated, this process is ended.

At step S62, a target wheel cylinder fluid amount by the ABS operation is read from the brake control unit 32, and the routine proceeds to step S63.

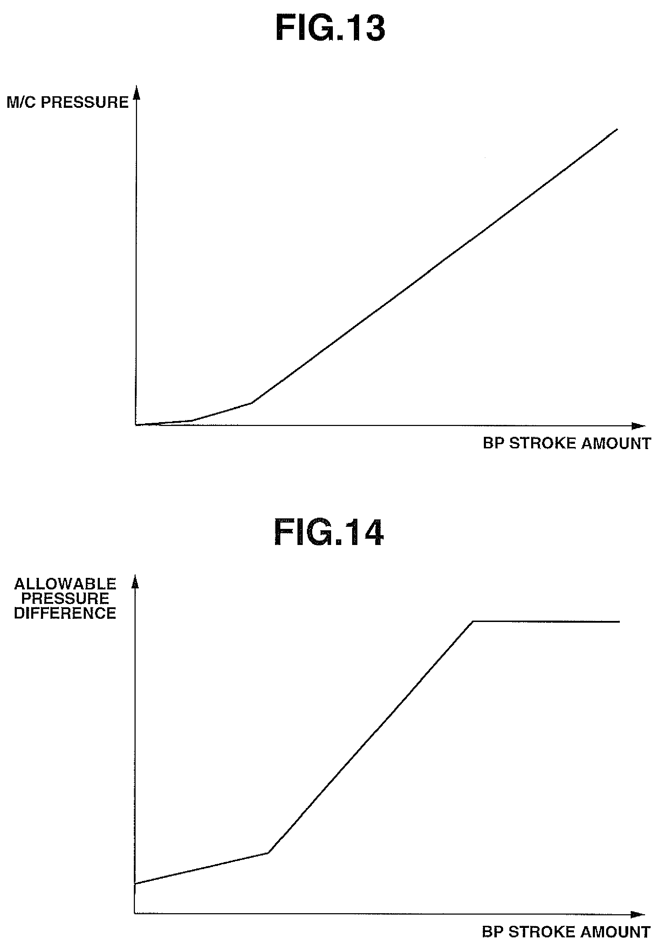

At step S63, a current stroke amount of the brake pedal BP is detected, and the routine proceeds to step S64. Fig. 13 is a map showing a relationship between the stroke amount of the brake pedal BP and a discharge fluid amount of the master cylinder discharge fluid amount (hereinafter described as the master cylinder fluid amount). The master cylinder fluid amount can be determined from the stroke amount using this map.

At step S64, a wheel cylinder increase/decrease pressure fluid amount is calculated, and the routine proceeds to step S65. The wheel cylinder increase/decrease pressure fluid amount is an amount of the brake fluid that is refluxed from the wheel cylinder W/C to the master cylinder M/C to attain the target wheel cylinder fluid amount from a current wheel cylinder fluid amount by the pressure decrease control. Also, the wheel cylinder increase/decrease pressure fluid amount is an amount of the brake fluid that flows out of the master cylinder M/C to the wheel cylinder W/C to attain the target wheel cylinder fluid amount from a current wheel cylinder fluid amount by the pressure increase control.

At step S65, a brake pedal variation suppression correction value is calculated, and the routine proceeds to step S66. The brake pedal variation suppression correction value is a value for suppressing variation of the reaction force of the brake pedal BP and the vibration of the brake pedal BP, which are caused by increase of the master cylinder fluid amount (a refluxing brake fluid characteristic) by the refluxing brake fluid during the pressure decrease control or caused by decrease of the master cylinder fluid amount (an outflowing brake fluid characteristic) by the outflowing brake fluid during the pressure increase control.

At step S66, a fluid amount difference between the master cylinder fluid amount and the wheel cylinder fluid amount is calculated, and the routine proceeds to step S67. As the fluid amount difference, a fluid amount difference when the wheel cylinder fluid amount becomes a maximum after start of the ABS control is used. Or, a maximum wheel cylinder fluid amount of the current wheel cylinder fluid amount could be used.

At step S67, an operating noise suppression correction value is calculated, and the routine proceeds to step S68. The operating noise suppression correction value is a correction value for suppressing operating noise generated at the ESC 31 during the ABS operation. A map of a sensory evaluation point with respect to the fluid amount difference is created by an experiment in the same manner as Fig. 6 of the embodiment 1, and the operating noise suppression correction value is set so that the fluid amount difference becomes an allowable fluid amount difference.

At step S68, a master cylinder fluid amount correction value is calculated, and the routine proceeds to step S69. The master cylinder fluid amount correction value can be determined by the sum (a total) of the brake pedal variation suppression correction value and the operating noise suppression correction value.

At step S69, a master cylinder fluid amount correction command value is calculated, and the routine proceeds to step S70. The master cylinder fluid amount correction command value can be determined by the sum (a total) of the current master cylinder fluid amount and the master cylinder fluid amount correction value.

At step S70, a judgment is made as to whether or not a fluid amount by the master cylinder fluid amount correction command value is within a controllable range by the electric booster 60. If it is feasible, the routine proceeds to step S72. If it is not feasible, the routine proceeds to step S71.

At step S71, the master cylinder fluid amount correction command value is limited to (or is set to) a controllable maximum value by the electric booster 60, and the routine proceeds to step S72.

At step S72, the master cylinder fluid amount correction command value is outputted to the electric booster 60, and this process is ended.

### [Operation]

The stroke amount sensor 20 that detects the stroke amount of the brake pedal BP, and the refluxing brake fluid characteristic is the stroke amount change calculated by the stroke amount sensor 20 which occurs according to or in response to fluid flow of the brake fluid in the P-line pipe U1, the S-line pipe U2 and the pipes L1, L2, L3 and L4.

With this, the electric booster 60 can be controlled according to the stroke amount change during the ABS control, and it is possible to suppress the variation of the master cylinder pressure and suppress the variation of the brake pedal BP.

### [Effect]

(9) The stroke amount sensor 20 (a stroke amount calculation unit) that calculates the stroke amount of the brake pedal BP (the braking operation member) is provided, and the refluxing brake fluid characteristic is the stroke amount change calculated by the stroke amount sensor 20 which occurs according to or in response to fluid flow of the brake fluid in the P-line pipe U1, the S-line pipe U2 (the first brake fluid passage) and the pipes L1, L2, L3 and L4 (the second brake fluid passage).

Therefore, the electric booster 60 can be controlled according to the stroke amount change during the ABS control, and it is possible to suppress the variation of the master cylinder pressure and suppress the variation of the brake pedal BP.

### [Embodiment 5]

Contents of the electric booster control upon operation of the ABS control according to an embodiment 5 are different from those of the embodiment 1. In the embodiment 5, the same configuration as that of the embodiment 1 is indicated by the same reference sign, and its explanation will be omitted here.

In the embodiment 1, the allowable pressure difference when setting the operating noise suppression correction value is determined by the sensory evaluation point obtained by the experiment. However, in the embodiment 5, the allowable pressure difference is determined by the stroke amount of the brake pedal BP. Fig. 14 is a map showing a relationship between the stroke amount and the allowable pressure difference. The allowable pressure difference is set to a pressure difference corresponding to the stroke amount using this map.

### [Operation]

When driver's brake operation is great, i.e. when there is driver's intention to apply an abrupt brake, even if the noise is generated during the ABS control, the drive is less apt to receive odd feeling of the noise. Therefore, in the embodiment 5, when the brake stroke amount is large, the allowable pressure difference is set to be large.

### [Effect]

(10) The pressure difference between the master cylinder pressure and the wheel cylinder pressure is set (steps S6, S7: a pressure difference setting unit), and a magnitude of the pressure difference is set according to driver's brake operation state.

Therefore, the pressure difference can be set according to the driver's intention.

(11) The stroke amount sensor 20 (the stroke amount calculation unit) that calculates the stroke amount of the brake pedal BP (the braking operation member) is provided, the pressure difference between the master cylinder pressure and the wheel cylinder pressure is set (steps S6, S7: the pressure difference setting unit), and the magnitude of the pressure difference is set according to the calculated stroke amount.

Therefore, the driver's intention is estimated from the stroke amount, then the pressure difference can be set.

### [Other embodiments]

Although the present invention has been explained according to the embodiments 1 to 5, configuration of the present invention is not limited to the embodiments 1 to 5. The present invention includes all design modifications and equivalents belonging to the technical scope of the present invention.

### [Other embodiment 1]

In the embodiment 1, the brake pedal variation suppression correction value is set by the increase of the master cylinder pressure (the refluxing brake fluid characteristic) by the refluxing brake fluid during the pressure decrease control or by the decrease of the master cylinder pressure (the outflowing brake fluid characteristic) by the outflowing brake fluid during the pressure increase control.

However, the brake pedal variation suppression correction value could be set by increase gradient of the master cylinder pressure (a refluxing brake fluid characteristic) by the refluxing brake fluid during the pressure decrease control or by decrease gradient of the master cylinder pressure (an outflowing brake fluid characteristic) by the outflowing brake fluid during the pressure increase control.

With this, a time integral value of the brake pedal variation suppression correction value can be zero, and it is possible to make the correction by the brake pedal variation suppression correction value only when the fluid pressure change occurs.

### [Other embodiment 2]

In the embodiment 2, the brake pedal variation suppression correction value is set by the increase of the master cylinder fluid amount (the refluxing brake fluid characteristic) by the refluxing brake fluid during the pressure decrease control or by the decrease of the master cylinder fluid amount (the outflowing brake fluid characteristic) by the outflowing brake fluid during the pressure increase control.

However, the brake pedal variation suppression correction value could be set by increase gradient of the master cylinder fluid amount (a refluxing brake fluid characteristic) by the refluxing brake fluid during the pressure decrease control or by decrease gradient of the master cylinder fluid amount (an outflowing brake fluid characteristic) by the outflowing brake fluid during the pressure increase control.

With this, a time integral value of the brake pedal variation suppression correction value can be zero, and it is possible to make the correction by the brake pedal variation suppression correction value only when the fluid amount change occurs.

### [Other embodiment 3]

In the embodiment 3, the brake pedal variation suppression correction value is set by the increase of the operation depression force (the refluxing brake fluid characteristic) due to increase of the master cylinder pressure by the refluxing brake fluid during the pressure decrease control or by the decrease of the operation depression force (the outflowing brake fluid characteristic) due to decrease of the master cylinder pressure by the outflowing brake fluid during the pressure increase control.

However, the brake pedal variation suppression correction value could be set by increase gradient of the master cylinder pressure, i.e. increase gradient of the operation depression force (the refluxing brake fluid characteristic) by the refluxing brake fluid during the pressure decrease control or by decrease gradient of the master cylinder pressure, i.e. decrease gradient of the operation depression force (the outflowing brake fluid characteristic) by the outflowing brake fluid during the pressure increase control.

With this, a time integral value of the brake pedal variation suppression correction value can be zero, and it is possible to make the correction by the brake pedal variation suppression correction value only when the operation depression force change occurs.

### [Other embodiment 4]

In the embodiment 4, the brake pedal variation suppression correction value is set by decrease of the stroke amount (a refluxing brake fluid characteristic) due to the increase of the master cylinder fluid amount by the refluxingbrake fluid during the pressure decrease control or by increase of the stroke amount (an outflowing brake fluid characteristic) due to decrease of the master cylinder fluid amount by the outflowing brake fluid during the pressure increase control.

However, the brake pedal variation suppression correction value could be set by increase gradient of the master cylinder fluid amount, i.e. decrease gradient of the stroke amount (a refluxing brake fluid characteristic) by the refluxing brake fluid during the pressure decrease control or by decrease gradient of the master cylinder fluid amount, i.e. increase gradient of the stroke amount (an outflowing brake fluid characteristic) by the outflowing brake fluid during the pressure increase control.

With this, a time integral value of the brake pedal variation suppression correction value can be zero, and it is possible to make the correction by the brake pedal variation suppression correction value only when the stroke amount change occurs.

### [Other embodiment 5]

In the embodiment 5, the allowable pressure difference when setting the operating noise suppression correction value is determined according to the stroke amount of the brake pedal BP. However, the allowable pressure difference could be set according to the operation depression force of the brake pedal BP.

With this, the driver's intention is estimated from the operation depression force, then the pressure difference can be set.

### [Other embodiment 6]

In the embodiment 5, the allowable pressure difference when setting the operating noise suppression correction value is determined according to the stroke amount of the brake pedal BP. However, the allowable pressure difference could be set according to the vehicle speed.

With this, the driver's intention is estimated from the vehicle speed, then the pressure difference can be set.

### [Other embodiment 7]

In the embodiment 5, the allowable pressure difference when setting the operating noise suppression correction value is determined according to the stroke amount of the brake pedal BP. However, the allowable pressure difference could be set according to a vehicle deceleration.

With this, the driver's intention is estimated from the vehicle deceleration, then the pressure difference can be set.

### [Other embodiment 8]

In the embodiment 5, the allowable pressure difference when setting the operating noise suppression correction value is determined according to the stroke amount of the brake pedal BP. However, the allowable pressure difference could be set according to abrupt brake.

With this, the driver's intention is estimated from the abrupt brake, then the pressure difference can be set.

### [Other embodiment 9]

Although the above embodiments are explained on the basis of the ESC 31 provided with the plunger pump 19. However, instead of the plunger pump 19, a gear pump or a trochoid pump could be used.

With this, quietness of the ESC 31 can be secured.

Technical ideas that can be understood from the embodiment described above, except contents recited in scope of claim for patent, will be explained below.
(A) The brake control device as claimed in claim 1, further comprises: a stroke amount calculation unit calculating a stroke amount of the braking operation member, and wherein the refluxing brake fluid characteristic is a change of the stroke amount calculated by the stroke amount calculation unit, which occurs in response to fluid flow of the brake fluid in the first and second brake fluid passages.
   Therefore, the upstream side brake fluid pressure producing device can be controlled according to the stroke amount change during the ABS control, and it is possible to suppress the variation of the master cylinder pressure and suppress the variation of the brake pedal BP.
(B) The brake control device as claimed in claim 1, further comprises : an operation depression force calculation unit calculating an operation depression force of the braking operation member, and wherein the refluxing brake fluid characteristic is a change of the operation depression force calculated by the operation depression force calculation unit, which occurs in response to fluid flow of the brake fluid in the first and second brake fluid passages.
   Therefore, the upstream side brake fluid pressure producing device can be controlled according to the operation depression force change during the ABS control, and it is possible to suppress the variation of the master cylinder pressure and suppress the variation of the brake pedal BP.
(C) The brake control device as claimed in claim 1, further comprises: a master cylinder pressure calculation unit calculating a master cylinder pressure; and a wheel cylinder pressure calculation unit calculating the wheel cylinder pressure, and wherein the braking operation member variation suppression control unit adjusts the boost state of the upstream side brake fluid pressure producing device according to the calculated refluxing brake fluid characteristic and outflowing brake fluid characteristic, adjusts the boost state of the upstream side brake fluid pressure producing device according to a pressure difference between the master cylinder pressure and the wheel cylinder pressure, which is calculated upon operation of the antilock brake control unit, and suppresses the variation of the braking operation member.
   Therefore, it is possible to reduce the noise of the downstream side brake fluid pressure producing device during the ABS control.
(D) The brake control device as claimed in (c), further comprises: a pressure difference setting unit setting a pressure difference between the master cylinder pressure and the wheel cylinder pressure, and wherein a magnitude of the pressure difference is set according to driver's brake operation state.
   Therefore, the pressure difference can be set according to the driver's intention.
(E) The brake control device as claimed in (c), further comprises: a stroke amount calculation unit calculating a stroke amount of the braking operation member; and a pressure difference setting unit setting a pressure difference between the master cylinder pressure and the wheel cylinder pressure, and wherein a magnitude of the pressure difference is set according to the calculated stroke amount.
   Therefore, the driver's intention is estimated from the stroke amount, then the pressure difference can be set.
(F) The brake control device as claimed in (c), further comprises : an operation depression force calculation unit calculating an operation depression force of the braking operation member; and a pressure difference setting unit setting a pressure difference between the master cylinder pressure and the wheel cylinder pressure, and wherein a magnitude of the pressure difference is set according to the calculated operation depression force.
   Therefore, the driver's intention is estimated from the operation depression force, then the pressure difference can be set.
(G) The brake control device as claimed in (c), further comprises: a vehicle speed calculation unit calculating a vehicle speed; and a pressure difference setting unit setting a pressure difference between the master cylinder pressure and the wheel cylinder pressure, and wherein a magnitude of the pressure difference is set according to the calculated vehicle speed.
   Therefore, the driver's intention is estimated from the vehicle speed, then the pressure difference can be set.
(H) The brake control device as claimed in (c), further comprises: a vehicle deceleration calculation unit calculating a vehicle deceleration; and a pressure difference setting unit setting a pressure difference between the master cylinder pressure and the wheel cylinder pressure, and wherein a magnitude of the pressure difference is set according to the calculated vehicle deceleration.
   Therefore, the driver's intention is estimated from the vehicle deceleration, then the pressure difference can be set.
(I) The brake control device as claimed in (c), further comprises : an abrupt brake state detecting unit detecting abrupt brake by driver's operation of the braking operation member; and a pressure difference setting unit setting a pressure difference between the master cylinder pressure and the wheel cylinder pressure, and wherein a magnitude of the pressure difference is set according to a state of the detected abrupt brake sate.
   Therefore, the driver's intention is estimated from the abrupt brake, then the pressure difference can be set.
(J) The brake control device as claimed in (c), further comprises: a pressure difference setting unit setting a pressure difference between the master cylinder pressure and the wheel cylinder pressure, and wherein a magnitude of the pressure difference is set so that operating noise of the downstream side brake fluid pressure producing device is equal to or smaller than a predetermined operating noise.
   Therefore, the occupant's odd feeling can be suppressed.
(K) The brake control device as claimed in claim 1, further comprises: a fluid amount change calculation unit calculating a fluid amount change in the first and second brake fluid passages, and wherein the refluxing brake fluid characteristic is a gradient of the fluid amount change in the first and second brake fluid passages.
   Therefore, in the control suppressing the variation of the braking operation member, a time integral value of a control amount can be zero, and it is possible to make the correction only when the fluid amount change occurs.
(L) The brake control device as claimed in claim 1, further comprises: a fluid pressure change calculation unit calculating a fluidpressure change in the first and second brake fluid passages, and wherein the refluxing brake fluid characteristic is a gradient of the fluid pressure change in the first and second brake fluid passages.
   Therefore, in the control suppressing the variation of the braking operation member, a time integral value of a control amount can be zero, and it is possible to make the correction only when the fluid pressure change occurs.
(M) The brake control device as claimed in claim 1, further comprises : an operation depression force calculation unit calculating an operation depression force of the braking operation member, and wherein the refluxing brake fluid characteristic is a gradient of change of the operation depression force, which corresponds to a gradient of change of the fluid pressure, in the first and second brake fluid passages.
   Therefore, in the control suppressing the variation of the braking operation member, a time integral value of a control amount can be zero, and it is possible to make the correction only when the operation depression force change occurs.
(N) The brake control device as claimed in claim 1, further comprises: a stroke amount calculation unit calculating a stroke amount of the braking operation member, and wherein the refluxing brake fluid characteristic is a gradient of change of the stroke amount, which corresponds to a gradient of change of the fluid pressure, in the first and second brake fluid passages. Therefore, a time integral value of the brake pedal variation suppression correction value can be zero, and it is possible to make the correction by the brake pedal variation suppression correction value only when the stroke amount change occurs.

## Claims

1. A brake control device comprising:
a braking operation memberoperated by a driver;
an upstream side brake fluid pressure producing deviceboosting a braking operation force of the braking operation member and producing a fluid pressure in a master cylinder;
a downstream side brake fluid pressure producing devicedriving a pump and a control valve and performing a pressure increase/decrease control of a wheel cylinder pressure;
a first brake fluid passageconnecting the master cylinder and the downstream side brake fluid pressure producing device;
a second brake fluid passage connecting the downstream side brake fluid pressure producing device and a wheel cylinder;
an antilock brake control unithaving a pressure decrease control that refluxes brake fluid in the wheel cylinder provided at a wheel to the master cylinderthrough the first brake fluid passage and the second brake fluid passage by the pump and a pressure increase control that increases the wheel cylinder pressure by the brake fluid in the master cylinder;
a refluxing brake fluid characteristic calculation unit calculating a characteristic of the brake fluid refluxing to the master cylinder by the pressure decrease control;
an outflowing brake fluid characteristic calculation unitcalculating a characteristic of the brake fluid flowing out of the master cylinderinto the wheel cylinder by the pressure increase control; and
a braking operation member variation suppression control unit adjusting a boost state of the upstream side brake fluid pressure producing device according to the calculated re flux ing brake fluid characteristic and outflowing brake fluid characteristic, and suppressing variation of the braking operation member.

2. The brake control device as claimed in claim 1, further comprising:
a fluid amount change calculation unit calculating a fluid amount change in the first and secondbrake fluid passages, and wherein
the refluxing brake fluid characteristic is the fluid amount change of the brake fluid in the first and second brake fluid passages calculated by the fluid amount change calculation unit.

3. The brake control device as claimed in claim 1, further comprising:
a fluid pressure change calculation unit calculating a fluid pressure change in the first and second brake fluid passages, and wherein
the refluxing brake fluid characteristic is the fluid pressure change of the brake fluid in the first and second brake fluid passages calculated by the fluid pressure change calculation unit.

4. The brake control device as claimed in claim 1, further comprising:
a stroke amount calculation unit calculating a stroke amount of the braking operation member, and wherein
the refluxingbrake fluid characteristic is a change of the stroke amount calculated by the stroke amount calculation unit, which occurs in response to fluid flow of the brake fluid in the first and second brake fluid passages.

5. The brake control device as claimed in claim 1, further comprising:
an operation depression force calculation unit calculating an operation depression force of the braking operation member, and wherein
the refluxingbrake fluid characteristic is a change of the operation depression force calculated by the operation depression force calculation unit, which occurs in response to fluid flow of the brake fluid in the first and second brake fluid pas sages .

6. The brake control device as claimed in claim 1, further comprising:
a master cylinder pressure calculation unit calculating a master cylinder pressure; and
a wheel cylinder pressure calculation unit calculating the wheel cylinder pressure, and wherein
the braking operation member variation suppression control unit adjusts the boost state of the upstream side brake fluid pressure producing deviceaccording to the calculated refluxing brake fluid characteristic and outflowing brake fluid characteristic, adjusts the boost state of the upstream side brake fluid pressure producing device according to a pressure difference between the master cylinder pressure and the wheel cylinder pressure, which is calculated upon operation of the antilock brake control unit, and suppresses the variation of the braking operation member.

7. The brake control device as claimed in claim 6, further comprising:
a pressure difference setting unit setting a pressure difference between the master cylinder pressure and the wheel cylinder pressure, and wherein
a magnitude of the pressure difference is set according to driver's brake operation state.

8. The brake control device as claimed in claim 6, further comprising:
a stroke amount calculation unit calculating a stroke amount of the braking operation member; and
a pressure difference setting unit setting a pressure difference between the master cylinder pressure and the wheel cylinder pressure, and wherein
a magnitude of the pressure difference is set according to the calculated stroke amount.

9. The brake control device as claimed in claim 6, further comprising:
an operation depression force calculation unit calculating an operation depression force of the braking operation member; and
a pressure difference setting unit setting a pressure difference between the master cylinder pressure and the wheel cylinder pressure, and wherein
a magnitude of the pressure difference is set according to the calculated operation depression force.

10. The brake control device as claimed in claim 6, further comprising:
a vehicle speed calculation unit calculating a vehicle speed; and
a pressure difference setting unit setting a pressure difference between the master cylinder pressure and the wheel cylinder pressure, and wherein
a magnitude of the pressure difference is set according to the calculated vehicle speed.

11. The brake control device as claimed in claim 6, further comprising:
a vehicle deceleration calculation unit calculating a vehicle deceleration; and
a pressure difference setting unit setting a pressure difference between the master cylinder pressure and the wheel cylinder pressure, and wherein
a magnitude of the pressure difference is set according to the calculated vehicle deceleration.

12. The brake control device as claimed in claim 6, further comprising:
an abrupt brake state detecting unit detecting abrupt brake by driver' s operation of the braking operation member; and
a pressure difference setting unit setting a pressure difference between the master cylinder pressure and the wheel cylinder pressure, and wherein
a magnitude of the pressure difference is set according to a state of the detected abrupt brake sate.

13. The brake control device as claimed in claim 6, further comprising:
a pressure difference setting unit setting a pressure difference between the master cylinder pressure and the wheel cylinder pressure, and wherein
a magnitude of the pressure difference is set so that operating noise of the downstream side brake fluid pressure producing device is equal to or smaller than a predetermined operating noise.

14. The brake control device as claimed in claim 1, further comprising:
a fluid amount change calculation unit calculating a fluid amount change in the first and secondbrake fluid passages, and wherein
the refluxing brake fluid characteristic is a gradient of the fluid amount change in the first and second brake fluid passages.

15. The brake control device as claimed in claim 1, further comprising:
a fluid pressure change calculation unit calculating a fluid pressure change in the first and second brake fluid passages, and wherein
the refluxing brake fluid characteristic is a gradient of the fluid pressure change in the first and second brake fluid passages.

16. The brake control device as claimed in claim 1, further comprising:
an operation depression force calculation unit calculating an operation depression force of the braking operation member, and wherein
the refluxing brake fluid characteristic is a gradient of change of the operation depression force, which corresponds to a gradient of change of the fluid pressure, in the first and second brake fluid passages.

17. The brake control device as claimed in claim 1, further comprising:
a stroke amount calculation unit calculating a stroke amount of the braking operation member, and wherein
the refluxing brake fluid characteristic is a gradient of change of the stroke amount, which corresponds to a gradient of change of the fluid pressure, in the first and second brake fluid passages.

18. A brake control device comprising:
a braking operation member operated by a driver;
a control booster boosting an operation depression force of the braking operation member by the driver and producing a fluid pressure in a master cylinder;
a brake fluid pressure producing device provided with an antilock brake control unit that drives a pump and a control valve and performs a pressure increase/decrease control of a wheel cylinder pressure;
a first brake fluid passageconnecting the master cylinder and the brake fluid pressure producing device;
a second brake fluid passage connecting the brake fluid pressure producing device and a wheel cylinder, and wherein
the antilock brake control unithas a pressure decrease control that refluxes brake fluid in the wheel cylinder provided at a wheel to the master cylinder through the first brake fluid passage and the second brake fluid passage by the pump and a pressure increase control that increases the wheel cylinder pressure by the brake fluid in the master cylinderboosted through the control booster; and
a braking operation member variation suppression control unit adjusting a boost state of the control booster according to a refluxing brake fluid characteristic of the brake fluid refluxing to the master cylinderby the pressure decrease control and an outflowing brake fluid characteristic of the brake fluid flowing out of the master cylinderinto the wheel cylinderby the pressure increase control, and suppressing variation of the braking operation member.

19. A brake control device comprising:
a braking operation memberoperated by a driver;
an upstream side brake fluid pressure producing device boosting a braking operation force of the braking operation member and producing a fluid pressure in a master cylinder;
a downstream side brake fluid pressure producing devicedriving a pump and a control valve and performing a pressure increase/decrease control of a wheel cylinder pressure;
a first brake fluid passageconnecting the master cylinder and the downstream side brake fluid pressure producing device;
a second brake fluid passageconnecting the downstream side brake fluid pressure producing device and a wheel cylinder;
an antilock brake control unithaving a pressure decrease control that refluxes brake fluid in the wheel cylinder provided at a wheel to the master cylinder through the first brake fluid passage and the second brake fluid passage by the pump and a pressure increase control that increases the wheel cylinder pressure by the brake fluid in the master cylinder; and
a braking operation member variation suppression control unit increasing or decreasing a boost state of the upstream side brake fluid pressure producing device during an antilock brake control by the antilock brake control unit, and suppressing variation of the braking operation member.
